# EUROPÄISCHE PATENTSCHRIFT

(11) **EP 2 425 627 B1**
(45) Veröffentlichungstag und Bekanntmachung des Hinweises auf die Patenterteilung: **30.12.2020**
(21) Anmeldenummer: 10743023.3
(22) Anmeldetag: 23.07.2010
(51) Int. Cl.: H04N 7/15

(54) **VERFAHREN ZUR ZEITLICHEN SYNCHRONISIERUNG DER INTRAKODIERUNG VON VERSCHIEDENEN UNTERBILDERN BEI DER ERZEUGUNG EINER MISCHBILDERVIDEOSEQUENZ**
METHOD FOR THE TIME SYNCHRONIZATION OF THE INTRA CODING OF A PLURALITY OF SUB IMAGES DURING THE GENERATION OF A MIXED IMAGE VIDEO SEQUENCE
MÉTHODE POUR LA SYNCHRONISATION TEMPORELLE DU CODAGE DE TYPE INTRA DE PLUSIEURS SOUS-IMAGES PENDANT LA GÉNÉRATION D'UNE SÉQUENCE VIDÉO D'IMAGES MIXTES

(43) Veröffentlichungstag der Anmeldung: 07.03.2012
(73) Patentinhaber: Unify GmbH & Co. KG, 81739 München (DE)
(72) Erfinder: AMON, Peter, 81675 München (DE); OERTEL, Norbert, 84032 Landshut (DE); AGHTE, Bernhard, 85622 Feldkirchen (DE)
(74) Vertreter: Fritzsche, Thomas
(86) Internationale Anmeldenummer: PCT/EP2010/004543
(87) Internationale Veröffentlichungsnummer: WO 2012/010188

(56) Entgegenhaltungen:
- WO-A1-2004/047444
- WO-A2-03/049418
- US-B1- 7 084 898

## Beschreibung

Die Erfindung betrifft zwei Verfahren zur Mischung zweier Videoströme mit einer Enkodierung eines Videostroms, ein Verfahren zum Mischen zweier Videoströme, ein Verfahren zur Durchführung einer Videokonferenz und eine Einrichtung zur Durchführung solcher Verfahren.

Verfahren zur Videokodierung, das heißt zur Kodierung von Videodatenströmen, finden heute in vielen Bereichen der Technik ein breites Anwendungsgebiet. Bei Videokonferenzsystemen ist es üblich, dass die Videoströme mehrerer Teilnehmer zu einem einzigen Videostrom vereinigt ("gemischt") werden. Bei einer solchen Vereinigung oder Mischung wird ein kodierter Ausgangsvideostrom aus zwei kodierten Eingangsvideoströmen, beispielsweise zum gemeinsamen Darstellen beider Videoströme erstellt. Ein derartiges Verfahren wird beispielsweise in der WO 2009/049974 A2 beschrieben.

WO 2004/047444 A1 offenbart ein Verfahren und System für statistisches Multiplexing, bei dem in Gruppen von definierten Rahmentypen kodiert werden, wobei eine zeitliche Staffelung für die Verarbeitung eines bestimmten Rahmentyps bei den verschiedenen Kanälen erzeugt wird. In einer bevorzugten Ausführungsform umfasst die Vorrichtung einen Rahmenzähler zum Synchronisieren von Rücksetzsignalen mit dem entsprechenden Kanal-Video-Encoder und ein Mittel zum Bereitstellen eines Timing-Offset zum Kanal-Video-Encoder entsprechend einer ausgewählten Rahmenstaffelung für einen bestimmten zugeordneten Kanal.

Der vorliegenden Erfindung liegt die Aufgabe zugrunde, ein Verfahren zur Enkodierung eines Videostroms anzugeben, das bei derartigen Anwendungen, insbesondere im Zusammenhang mit Videokonferenzen, verwendet werden kann. Diese Aufgabe wird durch ein Verfahren zur Mischung zweier Videoströme mit einer Enkodierung eines ersten Videostromes nach Patentanspruch 1 oder 2, durch ein Verfahren zur Durchführung einer Videokonferenz nach Patentanspruch 4, bei dem wenigstens zwei Videoströme nach einem Verfahren nach einem der Patentansprüche 1 bis 3 gemischt werden, und eine Einrichtung nach Patentanspruch 7 zur Durchführung eines Verfahrens nach einem der vorhergehenden Ansprüche gelöst.

Erfindungsgemäß ist es vorgesehen, dass bei der Erzeugung der kodierten Folge von Bildern ein Synchronisationssignal verwendet wird, welches aus einem von dem zu kodierenden ersten Videostrom unabhängigen zweiten Videostrom abgeleitet wird, oder welches der Enkodierung eines von dem zu kodierenden ersten Videostrom unabhängigen zweiten Videostrom in entsprechender Weise zugrunde gelegt wird, wie der Enkodierung des ersten Videostroms.

Unter der Ableitung eines Signals oder einer Information aus oder von einem Datenstrom, insbesondere eines Synchronisationssignals aus oder von einem Videostrom soll im Zusammenhang mit der Beschreibung der vorliegenden Erfindung jede Art der Erzeugung eines solchen Signals oder einer solchen Information verstanden werden, bei der strukturelle Eigenschaften des Datenstroms, aus oder von dem das Signal oder die Information abgeleitet wird, zur Erzeugung des abgeleiteten Signals oder der abgeleiteten Information verwendet werden. Da es sich bei einem Datenstrom um eine zeitliche Folge von Daten oder Datengruppen, beispielsweise von Bildern, Bildpunkten oder Blöcken von Bildpunkten handelt, wird die Struktur eines solchen Datenstroms durch die strukturellen Eigenschaften dieser Daten oder Datengruppen und ihre Zuordnung zu Zeitpunkten bestimmt. Im Beispielfall eines Datenstroms aus einer zeitlichen Folge gleichartig, also nach einem bestimmten Muster aufgebauter Datenblöcke, die jeweils einem bestimmten Zeitpunkt zugeordnet sind, könnte ein Synchronisationssignal aus diesem Datenstrom beispielsweise durch die Erfassung dieser Zeitpunkte und durch die Erzeugung eines Signals abgeleitet werden, welches diese Zeitpunkte beschreibt. Weitere Beispiele für die Ableitung eines Signals oder einer Information aus oder von einem Datenstrom, insbesondere eines Synchronisationssignals aus oder von einem Videostrom werden im weiteren Verlauf mit der Beschreibung bevorzugter Ausführungsbeispiele der Erfindung angegeben werden.

Bei dem erfindungsgemäßen Verfahren wird also ein erster Videostrom mit Hilfe eines Synchronisationssignals erstellt, welches aus einem von dem ersten Videostrom unabhängigen zweiten Videostrom abgeleitet wird, oder welches von diesem zweiten Videostrom zwar nicht abgeleitet wird, der Kodierung des zweiten Videostroms jedoch in entsprechender Weise zugrunde gelegt wird, wie der Enkodierung des ersten Videostroms. Bei diesem Synchronisationssignal kann es sich also auch um ein externes Synchronisationssignal, beispielsweise um ein einfaches Zeitsignal handeln, welches der Enkodierung wenigstens zwei zu kodierender Videoströme in entsprechender Weise zugrunde gelegt wird.

Bei der Enkodierung, d. h. bei der Kompression von Videoströmen, also von Sequenzen bewegter Bilder, wird die mit der Kompression einhergehende Datenreduktion im Wesentlichen auf zwei Wegen erreicht: Zum einen werden Einzelbilder mit einem vorzugsweise blockbasierten Verfahren, beispielsweise mit Hilfe der sogenannten diskreten CosinusTransformation (DCT), komprimiert. Dieses Verfahren entspricht in etwa dem bekannten JPEG-Standard für Einzelbilder. Darüber hinaus werden Abhängigkeiten (Korrelationen) zwischen aufeinander folgenden Einzelbildern, zwischen denen sich der Bildinhalt häufig nur geringfügig ändert, zur Datenreduktion ausgenutzt. Zu diesem Zweck werden sogenannte Prädiktionsstrukturen eingeführt, bei denen vorzugsweise drei Bildtypen (die auch als *Frames* bezeichnet werden) verwendet:
- Die sogenannten I-Bilder werden ohne Ausnutzung der Korrelation aufeinander folgender Bilder gespeichert. Diese Bilder hängen somit nicht von nachfolgenden oder vorhergehenden Bildern ab. Da zur Kodierung dieser Bilder nur Bildinhalte dieses einen Bildes verwendet werden, werden diese Bilder auch als "intra-kodierte" Bilder bezeichnet. Daher kommt der Name I-Bilder.
- Die sogenannten P-Bilder werden zusätzlich auch aus einem vorangegangenen P- oder I-Bild vorhergesagt (prädiziert) und heißen deshalb auch prädizierte Bilder.
- Sogenannte B-Bilder haben ihren Namen daher, dass diese Bilder bidirektional interpoliert bzw. prädiziert werden. Dabei können im Unterschied zu den P-Bildern zusätzlich auch Verweise auf ein nachfolgendes P- oder I-Bild vorhanden sein. Allerdings muss zur Dekodierung eines B-Bildes das nachfolgende Bild, auf das verwiesen wird, bereits dekodiert sein, wodurch eine größere Anzahl von Bildspeichern erforderlich ist und die Gesamtverzögerungszeit des Dekodiervorgangs häufig erhöht wird.

Eine zeitliche Abfolge dieser Bildtypen charakterisiert eine sogenannte Prädiktionsstruktur. Hierbei handelt es sich um eine strukturelle Eigenschaft eines Videostroms, aus dem vorzugsweise ein Synchronisationssignal oder eine entsprechende Information abgeleitet werden kann. So kann ein solches Synchronisationssignal aus der Prädiktionsstruktur eines Videostroms beispielsweise abgeleitet werden, indem die Zeitpunkte, welche beispielsweise I-Bildern in diesem Videostrom zugeordnet sind, in dem Synchronisationssignal aufgeführt werden. Andere Möglichkeiten zur Ableitung eines Synchronisationssignals aus einem Videostrom werden bei der nachstehenden Beschreibung bevorzugter Ausführungsbeispiele der Erfindung erkennbar.

Im Zusammenhang mit der Beschreibung der vorliegenden Erfindung bedeutet der Begriff Enkodierung (auch: Encodierung, Kodierung oder Codierung) die vorzugsweise mit einer Reduktion der Datenmenge (Datenkompression, Kompression) einhergehende digitale Repräsentation eines Videostroms, also eines Datenstroms, der ein Videosignal, das heißt eine zeitliche Folge digitaler oder digitalisierter Bilder, repräsentiert. Bei der Dekodierung (auch: Decodierung) eines solchen kodierten Videostromes wird üblicherweise ein Datenstrom erzeugt, der eine Wiedergabe oder Bearbeitung der Videosignale ermöglicht.

Bei einer bevorzugten Ausführungsform der vorliegenden Erfindung umfasst die Folge von Bildern prädiktionskodierte Bilder, insbesondere P-Bilder, und nicht prädiktionskodierte Bilder, insbesondere I-Bilder, und das Synchronisationssignal wird zur Synchronisation der Positionen von nicht prädiktionskodierten Bildern, insbesondere von I-Bildern, in den beiden Folgen von Bildern der beiden unabhängigen Videoströme verwendet. In dem ersten Fall, dass das Synchronisationssignal von dem zweiten Videostrom abgeleitet wird, wird das Synchronisationssignal vorzugsweise zur Steuerung der Positionen von nicht prädiktionskodierten Bildern im ersten Videostrom verwendet. In dem anderen Fall, dass das Synchronisationssignal zur Enkodierung beider Videoströme in entsprechender Weise verwendet wird, werden die Positionen von nicht prädiktionskodierten Bildern in beiden Folgen von Bildern in entsprechender Weise gesteuert.

Bei der Prädiktion von Bildern wird ausgenutzt, dass sich bestimmte Bildteile in den zeitlich aufeinander folgenden Bildern nur geringfügig verändern oder nur eine andere Position im darauffolgenden Bild einnehmen. Unter diesen Voraussetzungen ist eine Vorhersage künftiger Bildinhalte mit Hilfe von Bewegungsvektoren möglich, die die Verschiebung von Bildteilen zwischen aufeinander folgenden Bildern angeben. Dabei kommt es jedoch regelmäßig zu verbleibenden Abweichungen zwischen den zu kodierenden Bildblöcken, die dann beispielsweise mit Hilfe einer diskreten CosinusTransformation und einer anschließenden Quantisierung kodiert werden können.

Gemäß einem weiteren bevorzugten Ausführungsbeispiel ist es vorgesehen, dass das Synchronisationssignal von einer Einrichtung zur Mischung des ersten und des zweiten Videostroms erzeugt wird. Beispiele für solche Einrichtungen sind Videokonferenzsysteme, insbesondere die dabei verwendeten Server, denen eine Mehrzahl von zu kodierenden Videoströmen durch Teilnehmerendgeräte verschiedener Videokonferenzteilnehmer zur Verfügung gestellt wird. Das Synchronisationssignal enthält dabei vorzugsweise eine Information über den zeitlichen Versatz zwischen den Positionen von nicht prädiktionskodierten Bildern, insbesondere von I-Bildern, in den beiden Folgen von Bildern der beiden unabhängigen Videoströme oder es ist aus einer solchen Information abgeleitet.

Bei einem anderen bevorzugten Ausführungsbeispiel enthält das Synchronisationssignal eine Information über die Anzahl der prädiktionskodierten Bilder, insbesondere der P-Bilder oder der B-Bilder, die auf ein nicht prädiktionskodiertes Bild, insbesondere auf ein I-Bild, in wenigstens einem der beiden Videoströme bis zum Auftreten eines weiteren nicht prädiktionskodierten Bildes folgt oder das aus einer solchen Information abgeleitet ist.

Das erfindungsgemäße Verfahren und die unterschiedlichen Ausführungsbeispiele eignen sich zur Mischung zweier Videoströme, wobei wenigstens einer dieser Videoströme nach einem Verfahren der oben beschriebenen Art enkodiert wird oder wurde. Damit eignen sich diese Verfahren auch zur Durchführung einer Videokonferenz, bei der wenigstens zwei Videoströme nach einem der genannten Verfahren gemischt werden.

Als bevorzugte Ausführungsform eines derartigen Verfahrens zur Durchführung einer Videokonferenz ist vorgesehen, dass beim Eintritt eines weiteren Teilnehmers in die Videokonferenz dessen Videostrom zunächst unsynchronisiert enkodiert wird, und dass dessen Videostrom synchronisiert wird, sobald eine Einrichtung zum Mischen von Videoströmen ein Synchronisationssignal nach einem der vorhergehend oder nachfolgend beschriebenen Ausführungsbeispiele erzeugen kann. Besonders bevorzugt ist dabei eine Ausführungsform dieses Verfahrens, bei der eine Einrichtung zum Mischen von Videoströmen eine gewünschte Prädiktionsstruktur vor oder während der Synchronisation signalisiert.

Die vorliegende Erfindung kann auch durch eine Einrichtung zur Durchführung oder Unterstützung eines der genannten Verfahren realisiert werden, die zur Erzeugung und Aussendung oder zum Empfang oder zur Verarbeitung eines Synchronisationssignals nach einem der beschriebenen Verfahren eingerichtet ist.

Im Folgenden wird die Erfindung anhand der Figuren mit Hilfe bevorzugter Ausführungsbeispiele näher beschrieben.

Dabei zeigt
FIG. 1 in schematischer Weise ein bevorzugtes Ausführungsbeispiel eines erfindungsgemäßen Verfahrens zur Kodierung eines Videostroms;
FIG. 2 in schematischer Weise ein weiteres bevorzugtes Ausführungsbeispiel eines erfindungsgemäßen Verfahrens zur Kodierung eines Videostroms;
FIG. 3 einen ersten Videostrom mit einer ersten Prädiktionsstruktur mit einer sogenannten IPPP-Kodierung;
FIG. 4 einen zweiten Videostrom mit einer zweiten Prädiktionsstruktur mit einer sogenannten IPPP-Kodierung;
FIG. 5 einen Ausgangsvideostrom, der durch das Mischen der in den FIG. 3 und 4 gezeigten Videoströme entsteht, bei denen die Prädiktionsstrukturen nicht erfindungsgemäß synchronisiert sind;
FIG. 6 einen dritten Videostrom mit einer dritten, "hierarchischen" Prädiktionsstruktur;
FIG. 7 einen vierten Videostrom mit einer vierten, "hierarchischen" Prädiktionsstruktur;
FIG. 8 einen Ausgangsvideostrom, der durch das Mischen der beiden in den FIG. 6 und 7 gezeigten Videoströme entsteht, bei denen die Prädiktionsstrukturen nicht erfindungsgemäß synchronisiert sind;
FIG. 9 den in FIG. 6 gezeigten Videostrom mit einem erfindungsgemäßen Synchronisationssignal s;
FIG. 10 einen erfindungsgemäß modifizierten Videostrom mit einer verkürzten Bildgruppenlänge und mit einem erfindungsgemäßen Synchronisationssignal s;
FIG. 11 einen Ausgangsvideostrom, der durch das Mischen der beiden in den FIG. 9 und 10 gezeigten Videoströme entsteht, wobei die Prädiktionsstrukturen erfindungsgemäß synchronisiert sind;;
FIG. 12 einen Videostrom mit einer "hierarchischen" Prädiktionsstruktur, bei der eine Gruppe mit 7 P-Bildern von einem nicht prädiktionskodierten I-Bild abhängt;
FIG. 13 einen Videostrom mit einer "hierarchischen" Prädiktionsstruktur mit einer erfindungsgemäß durch das Synchronisationssignal s gegenüber der Darstellung in FIG. 12 verkürzten Bildgruppenlänge;
FIG. 14 einen Ausgangsvideostrom, der durch eine Mischung der in den FIG. 12 und 13 gezeigten, erfindungsgemäß synchronisierten Videoströme entsteht.

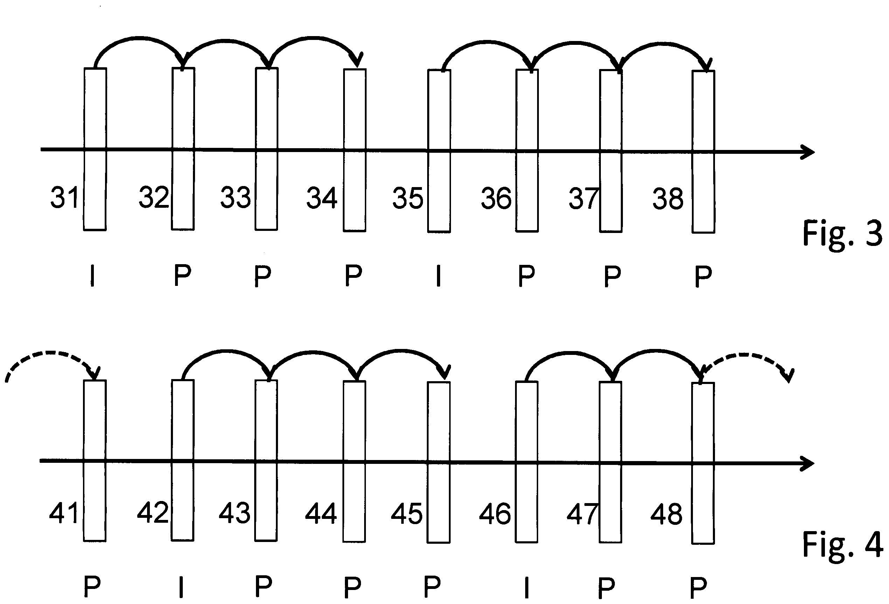

Die FIG. 3, 4 und 5 zeigen das Mischen zweier Videoströme mit einer IPPP-Kodierung, bei denen die Prädiktionsstrukturen nicht erfindungsgemäß synchronisiert sind. In dem in FIG. 3 dargestellten Videostrom folgen die Bilder 31, 32, 33, 34, 35, 36, 37 und 38 zeitlich aufeinander. Die Bilder 31 und 35 sind nicht prädiktionskodierte ("intra-kodierte") I-Bilder. Die Bilder 32, 33, 34, 36, 37 und 38 sind prädiktionskodierte P-Bilder. Die ohne Verweis auf ein anderes Bild kodierten I-Bilder 31 und 35 können ohne Verweis auf ein anderes Bild dekodiert werden. Die P-Bilder werden mit Hilfe einer Vorhersage ihres Bildinhaltes auf der Grundlage eines vorhergehenden Bildes kodiert und können daher nur unter Zuhilfenahme des Bildinhaltes dieses vorhergehenden Bildes dekodiert werden.

Entsprechendes gilt für den in der FIG. 4 dargestellten Videostrom aus den I-Bildern 42 und 46 und den P-Bildern 41, 43, 44, 45, 47 und 48, mit dem Unterschied, dass die I-Bilder 42 und 46 in dem in der FIG. 4 dargestellten Videostrom zu Zeitpunkten auftreten, zu denen in dem in der FIG. 3 dargestellten Videostrom die P-Bilder 32 und 36 auftreten. Zur Dekodierung des P-Bildes 41 ist die Kenntnis des Bildinhalts eines nicht in der FIG. 4 dargestellten, dem Bild 41 vorhergehenden Bildes erforderlich. Bild 48 wird zur Dekodierung eines in der FIG. 4 nicht dargestellten Bildes benötigt, welches dem Bild 48 zeitlich nachfolgt.

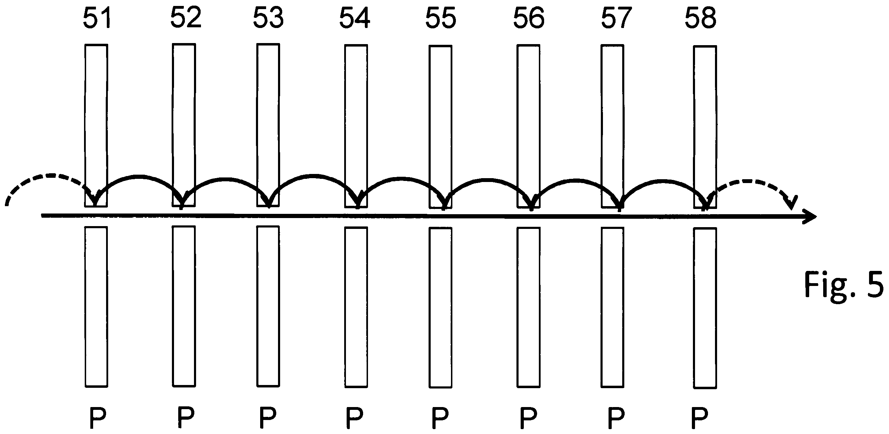

In den Figuren 3 und 4 weisen die einzelnen Bildgruppen ("groups of pictures", GOPs) zwar die gleiche Länge auf; allerdings sind die Startpunkte der Bildgruppen, nämlich die I-Bilder 31, 35, 42 und 46, zeitlich gegeneinander verschoben. Der Zeitpunkt, in dem in dem in FIG. 4 gezeigten Videostrom die nicht prädiktionskodierten I-Bilder 42 und 46 auftreten, entspricht in der in FIG. 3 dargestellten Videodatenfolge dem Zeitpunkt, in dem in dieser Videodatenfolge die prädiktionskodierten P-Bilder 32 bzw. 36 auftreten. Bei Mischung der beiden in den FIG. 3 und 4 gezeigten Videoströme ohne eine erfindungsgemäße Synchronisierung sind daher sämtliche Bilder in dem Ausgangsvideostrom, der in FIG. 5 gezeigt wird, prädiktionskodierte P-Bilder, nämlich die Bilder 51 bis 58. Sämtliche Bilder sind durch Verweise mit benachbarten Bildern verbunden.

Dieses Phänomen führt dazu, dass es keine Einsprungpunkte ("random access points") für den Ausgangsvideostrom gibt, was für die Zuverlässigkeit des Verfahrens und für dessen Fehlertoleranz nachteilig ist.

Im Fall der hierarchischen Kodierung tritt ein weiteres Problem auf. Eine hierarchische Kodierung ermöglicht eine zeitliche Skalierbarkeit, die u.a. die Realisierung besserer Fehlerschutz-Verfahren ermöglicht. So kann bei Videoströmen mit zeitlicher Skalierbarkeit die zeitliche BasisEbene, also die niedrigste zeitliche Auflösungsstufe gut geschützt sein, um eine unkontrollierte Fehlerfortpflanzung zu verhindern. Im Gegensatz dazu können bei einer IPPP-Kodierung bei einem Verlust eines P-Bildes alle folgenden P-Bilder nicht mehr fehlerfrei dekodiert werden.

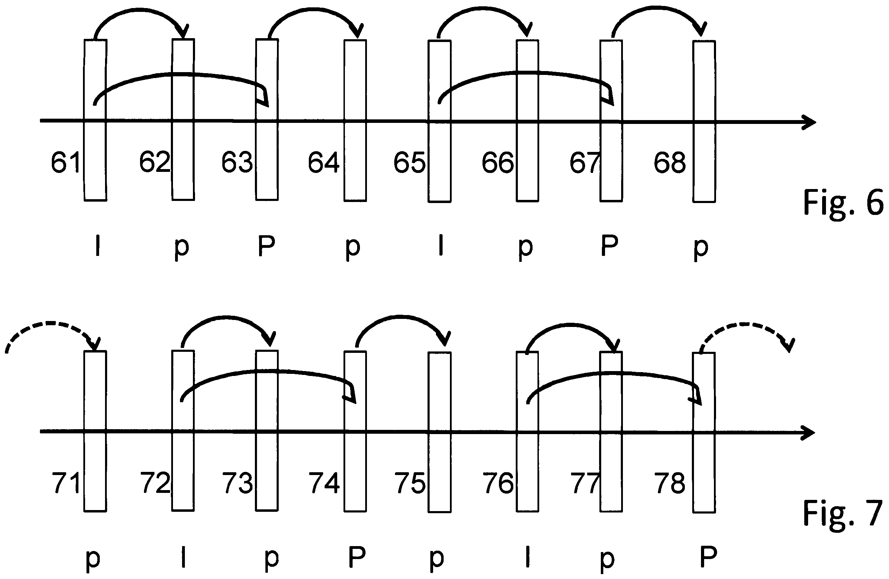

In den in FIG. 6 gezeigten Videostrom hängen die P-Bilder 63 und 67 nicht von ihren jeweiligen vorhergehenden p-Bildern 62 bzw. 66 ab, sondern von den ihnen jeweils vorhergehenden I-Bildern 61 bzw. 65. Im Gegensatz dazu hängen die p-Bilder 64 und 68 von den ihnen vorhergehenden P-Bildern 63 bzw. 67 ab. Ähnliches gilt für den in der FIG. 7 gezeigten Videostrom. Die P-Bilder 74 und 78 hängen nicht von ihren jeweiligen vorhergehenden p-Bildern 73 bzw. 77 ab, sondern von den ihnen jeweils vorhergehenden I-Bildern 72 bzw. 76. Im Gegensatz dazu hängen die p-Bilder 71 und 75 von den ihnen vorhergehenden P-Bildern 70 bzw. 74 ab, wobei das P-Bild 70 in der FIG. 7 nicht gezeigt ist.

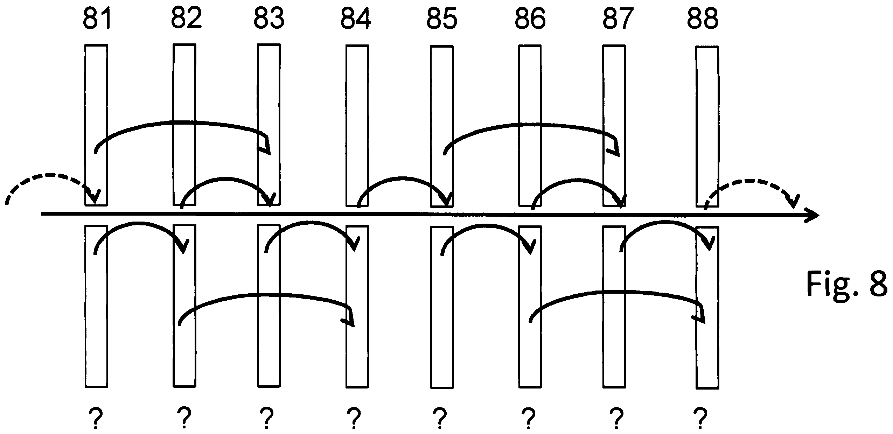

Wie in den FIG. 6, 7 und insbesondere in FIG. 8 gezeigt ist, führt diese hierarchische Prädiktionsstruktur beim Mischen der in den FIG. 6 und 7 gezeigten Videoströme zu dem Problem, dass viele Bilder, nämlich die Bilder 83, 84, 87 und 88 in der in FIG. 8 dargestellten Ausgangsbildfolge Abhängigkeiten von mehreren Vorgängerbildern, also von mehreren Referenzbildern aufweisen, die auch als Mehrfachreferenzen ("multiple references") bezeichnet werden, was regelmäßig zu einem erhöhten Speicheraufwand führt.

So hängt beispielsweise das Bild 83 von den Bildern 81 und 82, das Bild 84 von den Bildern 82 und 83, das Bild 87 von den Bildern 85 und 86 und das Bild 88 von den Bildern 86 und 87 ab. Solche Mehrfachabhängigkeiten erhöhen die Wahrscheinlichkeit von Fehlern bei der Dekodierung und erhöhen häufig auch den Aufwand für die Enkodierung und die Dekodierung. Außerdem können solche Mehrfachabhängigkeiten in manchen Videokodierstandards nicht abgebildet werden, und es geht auch die zeitliche Skalierbarkeit verloren, was in der FIG. 8 durch die "?"-Zeichen angedeutet ist. Dies führt zu einer höheren Fehleranfälligkeit bei der Dekodierung des Ausgangsvideostroms.

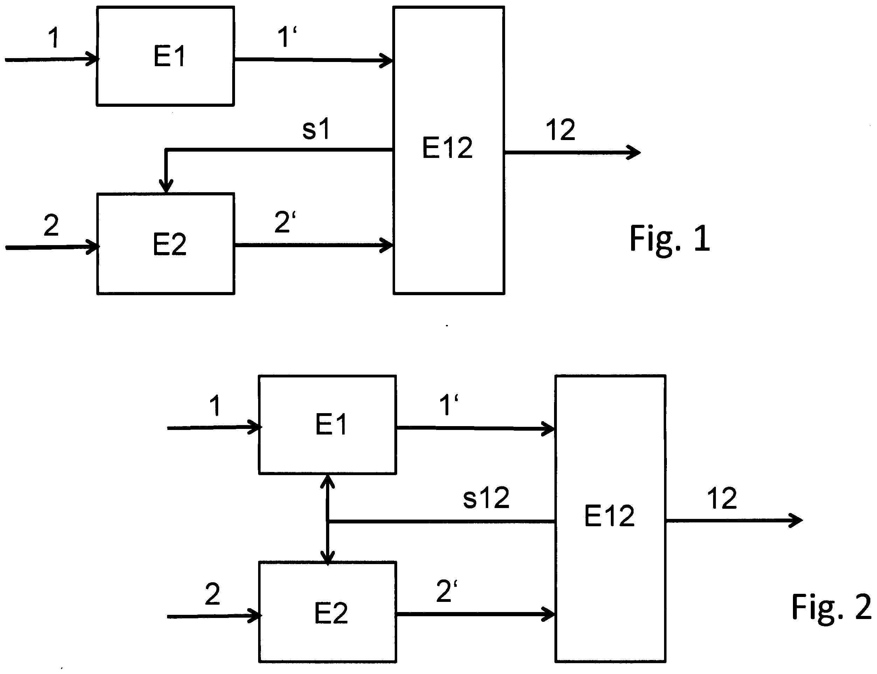

Die Erfindung löst dieses Problem nun, wie in den FIG. 1 und 2 dargestellt ist, durch die Steuerung der Enkodierung E1 bzw. E2 wenigstens eines Videodatenstroms 1 und bzw. oder 2 in Abhängigkeit von einem Synchronisationssignal s1 bzw. s12, welches in den in den FIG. 1 und 2 gezeigten Ausführungsbeispielen durch eine Einrichtung E12 zur Mischung der Videodatenströme 1 bzw. 2 bzw. ihrer kodierten Versionen 1' bzw. 2' bereitgestellt wird. Die Enkoder E1 bzw. E2 enkodieren die Videoströme 1 bzw. 2 und erzeugen die kodierten Videoströme 1' bzw. 2'. Diese werden in dem in der FIG. 1 gezeigten Ausführungsbeispiel der Einrichtung E12 zur Mischung der beiden Videoströme zugeführt, woraufhin oder wobei diese Einrichtung das Synchronisationssignal s1 bereitstellt, welches der Einrichtung E2 zur Enkodierung des Videostroms 2 zugeführt und von dieser verwendet wird.

Bei dem in der FIG. 1 gezeigten Ausführungsbeispiel wird das Synchronisationssignal s1 nur dem Enkoder E2, nicht aber dem Enkoder E1 zugeführt. Eine Synchronisation ist dennoch möglich, weil bei dieser Ausführungsform der Erfindung das Synchronisationssignal s1 von dem Videostrom 1 bzw. 1' abgeleitet wird. Das aus dem Videostrom 1 bzw. 1' abgeleitetet Synchronisationssignal enthält dabei Informationen zur Synchronisation der Enkodierung E2 des Videostroms 2, die aus den strukturellen Eigenschaften des Videostroms 1', beispielsweise aus dessen Prädiktionsstruktur, abgeleitet sind. Die Einrichtung zur Mischung E12 erzeugt anhand der erfindungsgemäß synchronisierten Videoströme 1' und 2' den gemischten Videostrom 12.

Bei dem in der FIG. 2 gezeigten Ausführungsbeispiel der Erfindung wird das Synchronisationssignal s12 beiden Enkodern E1 und E2 zugeführt. Dieses Synchronisationssignal s12 muss daher nicht von einem der beiden Videoströme abgeleitet sein. Es kann sich stattdessen auch um ein externes Signal, beispielsweise um ein Zeitsignal handeln, das von beiden Enkodern E1 und E2 - in entsprechender Weise - zur Synchronisation verwendet wird. Der Ausdruck "in entsprechender Weise" soll dabei bedeuten, dass das Synchronisationssignal von beiden Enkodern E1 und E2 algorithmisch in der gleichen Weise zur Enkodierung der jeweiligen Videoströme 1 und 2 verwendet wird.

Bei dem erfindungsgemäßen Verfahren wird ein Synchronisationssignal verwendet, das aus einem von dem ersten Videostrom unabhängigen zweiten Videostrom abgeleitet wird oder der Enkodierung eines von dem ersten Videostrom unabhängigen zweiten Videostroms in entsprechender Weise zugrunde gelegt wird, wie der Enkodierung des ersten Videostroms. Ein wesentlicher Gedanke der Erfindung ist es also, die Eingangsvideoströme, vorzugsweise deren Prädiktionsstruktur, zu synchronisieren, um auf diese Weise einen verbesserten Ausgangsvideostrom beim Mischen zu erzeugen.

Zu diesem Zweck sieht die Erfindung vor, wenigstens einen der beiden Enkoder so zu steuern, dass eine solche Synchronisierung erfolgen kann. Um eine Synchronisation von Videoströmen mit einer vorgegebenen Prädiktionsstruktur zu erreichen, sind zwei grundlegende Maßnahmen geeignet, die auch miteinander kombiniert werden können: Die Signalisierung von Verschiebungen durch einen zentralen Server, beispielsweise durch eine Einrichtung zum Mischen der Videoströme, oder die Verwendung einer gemeinsamen Zeitbasis. Beide Maßnahmen oder deren Kombination können durch eine Feinregelung der Bildwiederholrate noch ergänzt werden.

Die Einrichtung E12, beispielsweise ein Server, welche das Mischen der Eingangsvideoströme 1' und 2' durchführt, kann beispielsweise den zeitlichen Versatz der Eingangsvideoströme berechnen. Um den berechneten Versatz durch die Synchronisation zu eliminieren, schickt diese Einrichtung E12, beispielsweise ein Server in einem Videokonferenz-System, eine Anweisung an den Videoenkoder des oder der entsprechenden Videodatenquellen ("Endpunkte") mit der Aufforderung, die Anzahl der Bilder einer Bildgruppe ("GOP") um den jeweils berechneten Versatz zu verkürzen. Bei einer anderen Ausführungsform der Erfindung kann die Länge der Bildgruppe auch verlängert werden oder es kann eine Kombination bzw. eine Mischform von einer Verkürzung oder einer Verlängerung der Bildgruppenlänge verwendet werden. Falls die Bildgruppenlänge der Eingangsvideoströme noch nicht gleich ist, wird diese als neuer Parameter vorzugsweise mit übertragen.

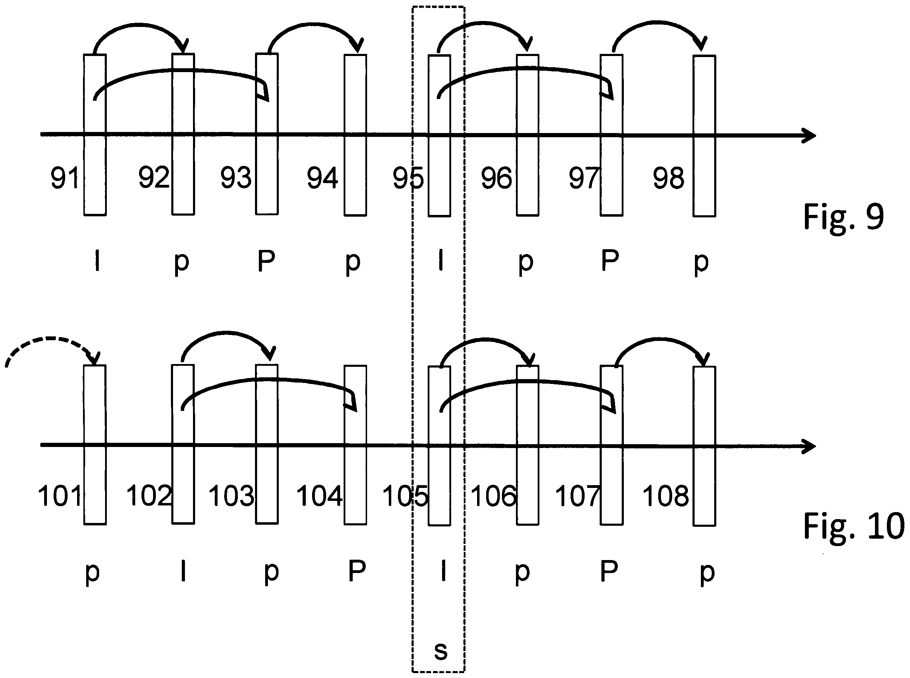

Dieses Vorgehen wird beispielhaft in den FIG. 9, 10 und 11 dargestellt. Das Synchronisationssignal s der Einrichtung E12 zum Mischen der Eingangsvideoströme an den Enkoder für den in FIG. 10 dargestellten Videostrom könnte etwa in einer Anweisung zur Verkürzung der Bildgruppenlänge um ein Bild bestehen. Der Enkoder könnte diese Anweisung dann bei der nächstfolgenden sich ergebenden Möglichkeit ausführen.

So zeigt FIG. 9 einen Videostrom mit den Bildern 91 bis 98 aus zwei Bildgruppen aus den Bildern 91 bis 94 und den Bildern 95 bis 98. Die jeweils ersten Bilder 91 und 95 einer Bildgruppe sind in diesem Beispiel I-Bilder, alle übrigen Bilder 92, 93, 94, 96, 97 und 98 sind P-Bilder oder p-Bilder. Die Unterscheidung zwischen dem Großbuchstaben und dem Kleinbuchstaben dient hier der Darstellung der Zugehörigkeit der Bilder zu unterschiedlichen Ebenen der Zeitauflösung.

Diese Situation entspricht der in FIG. 6 gezeigten Situation. Um nun die in FIG. 8 dargestellten Probleme zu vermeiden, wird der Enkoder des in FIG. 7 dargestellten Videostroms durch das Synchronisationssignal zur Verkürzung der Bildgruppenlänge veranlasst. Aus dem in FIG. 7 gezeigten Videostrom wird dann der in FIG. 10 dargestellte Videostrom, bei dem auf das prädiktionskodierte Bild 74 nicht das prädiktionskodierte Bild 75 folgt, sondern bei dem auf das prädiktionskodierte Bild 104 das nicht prädiktionskodierte I-Bild 105 folgt. Der Enkoder wird also durch das Synchronisationssignal dazu veranlasst, das Bild 105 ohne Bezug auf ein vorhergehendes Bild zu kodieren, also ein nicht prädiktionskodiertes I-Bild 105 zu erzeugen.

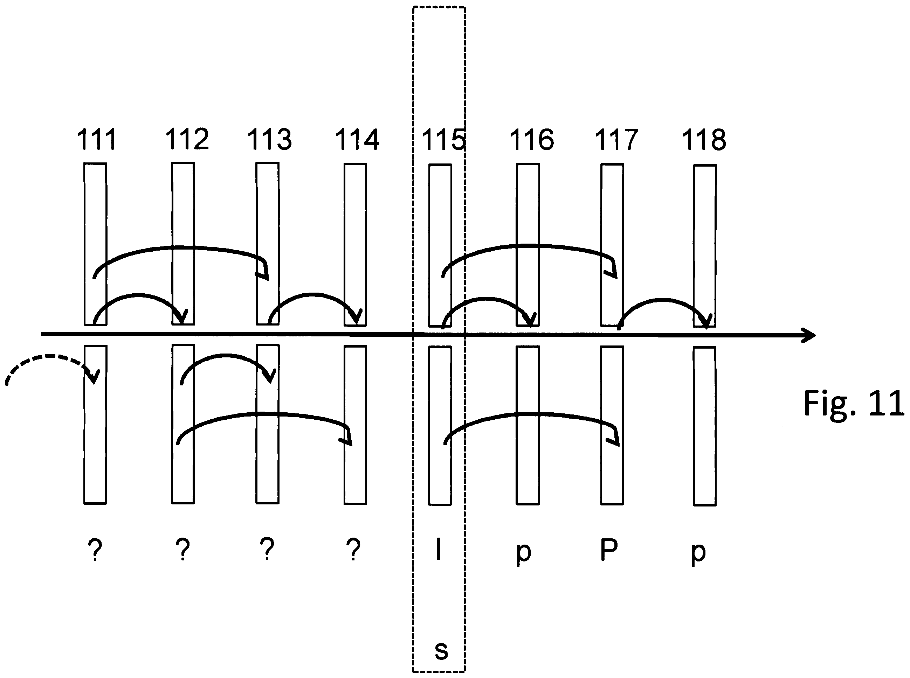

Beim Mischen dieser beiden erfindungsgemäß synchronisierten, in den FIG. 9 und 10 gezeigten Videoströme entsteht der in FIG. 11 dargestellte Ausgangsvideostrom, bei dem die in der FIG. 8 gezeigten Mehrfachabhängigkeiten der Bilder 87 und 88 nicht auftreten. Keines der Bilder 116, 117 oder 118 ist von mehr als einem vorhergehenden Bild abhängig.

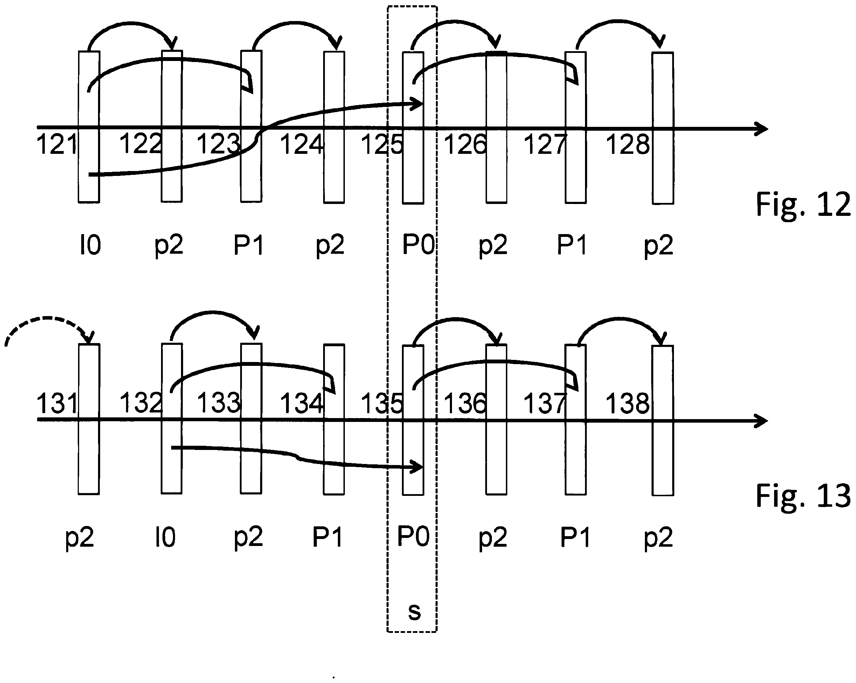

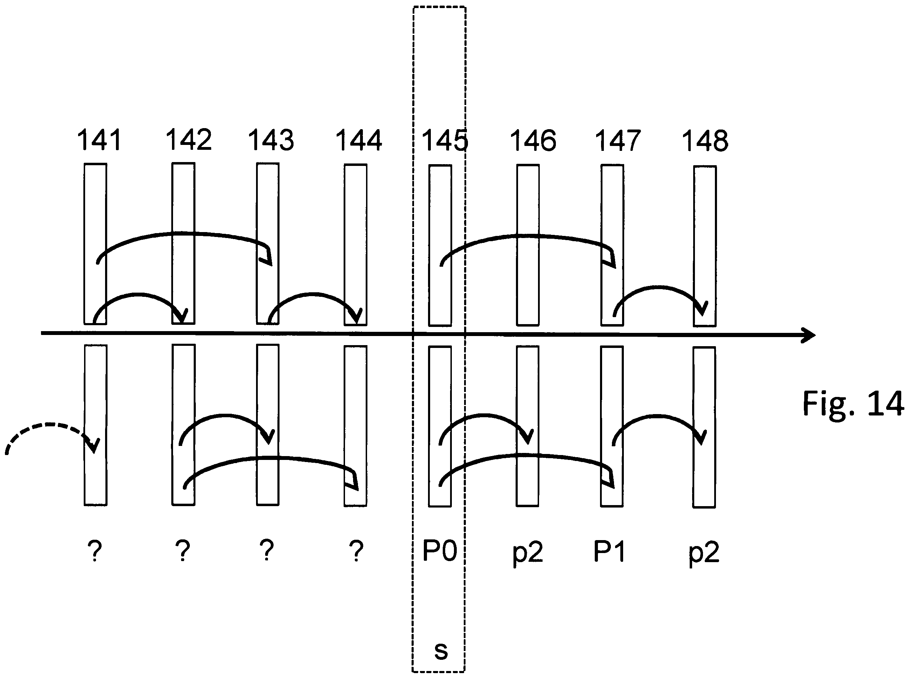

Eine Bildgruppe muss aber nicht unbedingt mit einem Intra-Bild (I-Bild) beginnen, sondern sie kann auch mit einem prädiktionskodierten Bild beginnen, wie dies in den FIG. 12, 13 und 14 gezeigt ist. Auf diese Weise kann vermieden werden, dass die Datenrate im Netzwerk durch die gleichzeitige Übertragung von I-Bildern aller Sender kurzfristig stark ansteigt. Hierzu kann vorzugsweise auch eine Information darüber, ob die Bildgruppe mit einem Intra-Bild beginnen soll, zusätzlich signalisiert und übertragen oder im Synchronisationssignal integriert werden.

Bei einigen bevorzugten Ausführungsbeispielen der Erfindung kann einem Enkoder im Synchronisationssignal oder zusätzlich zum Synchronisationssignal auch die Prädiktionsstruktur und der Abstand der Intra-Bilder signalisiert werden, wie dies beispielhaft an den in den FIG. 12 und 13 dargestellten Videoströmen gezeigt werden kann. Dies ist insbesondere dann vorteilhaft, falls die vom Enkoder erzeugte Prädiktionsstruktur nicht mit der vom Mischer E12 erwarteten Prädiktionsstruktur übereinstimmt. Eine Signalisierung könnte in solchen Fällen beispielsweise folgendermaßen aussehen: "I0 p2 P1 p2" mit "Intra-Periode = 8". Die Buchstabensymbole bezeichnen dabei den Bildtyp, wobei I für den Bildtyp Intra-Bild steht, P ("groß P")für den Bildtyp "P-Referenzbild", p ("klein p") für den Bildtyp "P-nicht-Referenzbild". Der Parameter "Intra-Periode" gibt dabei die zeitliche Skalierungsstufe an.

Bei einer anderen bevorzugten Ausführungsform der Erfindung kann die Nachricht auch einen anderen Inhalt haben, der allerdings ein ähnliches oder gleiches Verhalten des adressierten Enkoders erzielt. Eine Möglichkeit der Spezifikation wäre, die Enkoder anzuweisen, die Bildgruppe bei einer bestimmten Bildnummer zu starten, oder falls die Bildgruppenlängen noch nicht übereinstimmen, mit einer dedizierten Bildgruppenlänge zu starten. Die entsprechende Anweisung könnte beispielsweise lauten: "neue Bildgruppe mit Bildgruppenlänge gleich x bei Bildnummer y". Die Berechnung der Bildnummer erfolgt durch den Server aus der Verschiebung der Videoströme und der Verzögerung der Signalisierung.

Für Letzteres muss sichergestellt sein, dass das Signalisierungspaket den Enkoder vor der Kodierung der Bildnummer für die neue Bildgruppe erreicht. In beiden genannten Fällen kann die Signalisierung beispielsweise mit Hilfe eines Protokolls zur Echtzeitsteuerung von Medienströmen erfolgen, vorzugsweise mit Hilfe des RTP-Control-Protocol (RTCP).

Kommt ein neuer Teilnehmer in eine Videokonferenz, dann kann dieser zunächst unsynchronisiert mit dem Enkodieren und dem Versenden der Videodaten starten. Hierdurch geht zunächst eine vorher möglicherweise vorhandene Synchronizität (gleiche Prädiktionsstruktur) der anderen Teilnehmer verloren. Der neue Teilnehmer wird dann allerdings vorzugsweise soweit wie möglich synchronisiert, sobald der Server beispielsweise den Versatz berechnen kann. Vorab kann dem neuen Teilnehmer schon die gewünschte Prädiktionsstruktur signalisiert werden. Dies kann vorzugsweise bei der Aushandlung der Verbindung oder durch die bereits beschriebene RTCP-ähnliche Signalisierung geschehen.

Die beschriebenen und weitere noch folgende Ausführungsbeispiele können auch in Kombination verwirklicht werden. Dabei kann die Signalisierung allgemein folgende Elemente umfassen, die geeignet kombiniert werden können:
- einen Bildversatz oder eine Verlängerung oder eine Verkürzung der Bildgruppenlänge
- eine Entscheidung, ob eine neue Bildgruppe mit einem Intra-Bild beginnt
- die Bildgruppenlänge
- die Prädiktionsstruktur, welche implizit eine Information über die Bildgruppenlänge enthält
- die Intra-Periode, also den Abstand der Intra-Bilder

Diese Steuerungselemente oder Parameter werden vorzugsweise aus einem zweiten Videostrom abgeleitet, also aus dessen Prädiktionsstruktur oder aus anderen Struktureigenschaften dieses Videostroms ermittelt oder berechnet. Verschiedene Beispiele dafür wurden vorhergehend beschrieben.

Die Synchronisation der Prädiktionsstrukturen lässt sich auch durch eine gemeinsame Zeitbasis erreichen. Deshalb sieht die Erfindung Ausführungsbeispiele vor, bei denen sich jeder Endpunkt zunächst mit einer Referenzzeitbasis synchronisiert. Dies kann beispielsweise mit Hilfe des sogenannten Network-Time-Protocol (NTP) geschehen. Der Kommunikationsserver E12, der die Mischung der Videoströme 1' und 2' bewirkt, kann beispielsweise auch selbst als Quelle für die Referenzzeitbasis dienen. Eine solche Situation ist beispielsweise in FIG. 2 dargestellt.

Bei einer bevorzugten Ausführungsform der Erfindung kann dann die Signalisierung so erfolgen, dass der Server an jeden Endpunkt E1 bzw. E2 eine Aufforderung verschickt, zu einer bestimmten Zeit mit dem Verschicken einer bestimmten Prädiktionsstruktur zu starten. Der Startpunkt berechnet sich dabei vorzugsweise aus der Übertragungszeit der Daten vom Endpunkt an den Server. Diese Übertragungszeit der Daten vom Endpunkt an den Server kann vorzugsweise beispielsweise als Hälfte der sogenannten Round-Trip-Time (RTT) geschätzt werden. Der Zeitpunkt zum Beginnen der neuen Bildgruppe kann dann vorzugsweise wie folgt berechnet werden:
T(neue Bildgruppe; i) = T (Mischung; i) - T (Übertragung; i) ≈ T (Mischung, i) - RTT/2, für i = 1,..., n,
wobei n die Anzahl der Endpunkte, d.h. der zu mischenden unabhängigen Videoströme, also beispielsweise der Konferenzteilnehmer, ist.

Durch die Vorgabe des Startpunkts für eine Bildgruppe und die Vorgabe der Prädiktionsstruktur kann der Sender eine feste Abbildung (Mapping) zwischen Prädiktionsstruktur und Zeitbasis berechnen und fortan einen Videostrom mit einer synchronisierten Prädiktionsstruktur liefern. Aus experimentell überprüften Abschätzungen ergibt sich, dass die Genauigkeit des Network-Time-Protocol (NTP) hierbei etwa 10 Millisekunden beträgt.

Daher beträgt die Ungenauigkeit der Synchronisation auf dieser Grundlage maximal 20 Millisekunden, da die Endpunkte in unterschiedlichen Richtungen abweichen, (d. h. "vor- bzw. nachgehen") können. Dies entspricht bei einer Bildwiederholrate von 25 Hz einem Versatz von einem Bild.

Wie bereits erwähnt, kann dieser Versatz, falls vorhanden, durch die Signalisierung der Verschiebung, wie oben beschrieben, ausgeglichen werden. Je nach Anwendung und Ausführungsform der Erfindung kann eine Feinregelung der Bildwiederholrate vorteilhaft oder wünschenswert sein. Da vor allem ohne die Verwendung einer gemeinsamen Zeitbasis die Zeitreferenzen in den einzelnen Endpunkten auseinanderlaufen können, kann sich auch bei bereits synchronisierten Videoströmen und einer formal gleichen Bildwiederholrate mit der Zeit ein Versatz aufbauen. Um einem solchen Versatz entgegenzuwirken, kann die Bildrate eines oder mehrerer Endpunkte vorzugsweise entsprechend nachgeregelt werden. Dazu schickt der Server vorzugsweise eine Anweisung an den oder die Endpunkte E1 bzw. E2, etwa mit folgendem Inhalt: "Erhöhe die Bildwiederholrate um x", wobei ein negativer Wert für x einer Verringerung der Bildwiederholrate entsprechen soll.

Der Korrekturwert x kann dabei aus der Abweichung des Eingangsdatenstroms zur Referenzzeit vorzugsweise wie folgt berechnet werden: $x = \left[\left(Zielbildrate/geschätzte Bildrate\right)-1\right] * 100 %$ mit einer geschätzten Bildrate, die der Anzahl der empfangenen Bilder im Zeitintervall (also pro Zeitintervall) entspricht.

Die beschriebene Erfindung ermöglicht je nach Ausführungsform die Mischung von Videoströmen mit einem verhältnismäßig geringen Aufwand, insbesondere im Vergleich zur vollständigen Transkodierung der zu mischenden Videoströme. Dabei bleibt die zeitliche Skalierbarkeit erhalten.

Hierdurch ist es möglich, den Ausgangsvideostrom hinsichtlich der Bildwiederholfrequenz und der Datenrate an Anforderungen der Anwendung anzupassen, und zwar bei einer gleichzeitig verringerten Fehleranfälligkeit, vorzugsweise durch einen besonderen Fehlerschutz, beispielsweise durch Übertragungswiederholungen ("re-transmissions"), für die zeitliche Basisebene ("basis layer"), d. h. die niedrigste zeitliche Auflösungsstufe. Komplexe Prädiktionsstrukturen im Ausgangsvideostrom, die unter Umständen nicht durch einen Videokodierstandard abgebildet werden können, können mit Hilfe der Erfindung vermieden werden.

Der erfindungsgemäß erzeugte Ausgangsvideostrom kann häufig mit einem geringeren Speicheraufwand dekodiert werden. Eine zusätzliche Verzögerung, die bei herkömmlichen Verfahren häufig unvermeidbar ist, kann bei dem erfindungsgemäßen Verfahren minimiert oder ganz eliminiert werden, da die einzelnen zu mischenden Eingangsvideoströme nicht verzögert werden.

Die vorstehend beschriebenen Ausführungsbeispiele der Erfindung können auch vorteilhaft miteinander kombiniert werden. Die Erfindung ist jedoch nicht auf die vorstehend explizit beschriebenen Ausführungsbeispiele beschränkt. Der Fachmann ist anhand der vorliegenden Beschreibung der Erfindung ohne weiteres in der Lage, weitere vorteilhafte Ausführungsbeispiele aufzufinden und auszuführen.

## Patentansprüche

1. Verfahren zur Mischung zweier Videoströme (1, 2), mit einer Enkodierung eines ersten Videostroms (1), bei dem eine zeitliche Folge von Bildern erzeugt wird,
**dadurch gekennzeichnet,**
**dass** bei der Erzeugung der Folge von Bildern ein Synchronisationssignal (s1) verwendet wird, welches der Enkodierung eines von dem ersten Videostrom (1) unabhängigen zweiten Videostroms(2) algorithmisch in der gleichen Weise zugrunde gelegt wird wie bei der Enkodierung des ersten Videostroms (1),
**dass** zur Erzielung der Synchronisation von Eingangsvideoströmen und damit zum Verbessern eines Ausgangsvideostroms (12) beim Mischen die Anzahl der Bilder in einer ankommenden Bildgruppe um einen jeweils berechneten Versatz verkürzt und/oder verlängert wird, so dass der berechnete Versatz eliminiert wird,
**dass** die Folge von Bildern zeitlich prädiktionskodierte Bilder, insbesondere P-Bilder, und nicht zeitlich prädiktionskodierte Bilder, insbesondere I-Bilder, umfasst, und dass das Synchronisationssignal (s1) zur Synchronisation der Positionen von nicht prädiktionskodierten Bildern, insbesondere von I-Bildern, in den beiden Folgen von Bildern der beiden unabhängigen Videoströme verwendet wird.

2. Verfahren zur Mischung zweier Videoströme (1, 2), mit einer Enkodierung eines ersten Videostroms (1), bei dem eine zeitliche Folge von Bildern erzeugt wird,
**dadurch gekennzeichnet,**
**dass** bei der Erzeugung der Folge von Bildern ein Synchronisationssignal (s1) verwendet wird, welches aus einem von dem ersten Videostrom (1) unabhängigen zweiten Videostrom (2) abgeleitet wird,
**dass** zur Erzielung der Synchronisation von Eingangsvideoströmen und damit zum Verbessern eines Ausgangsvideostroms (12) beim Mischen die Anzahl der Bilder in einer ankommenden Bildgruppe um einen jeweils berechneten Versatz verkürzt und/oder verlängert wird, so dass der berechnete Versatz eliminiert wird,
**dass** die Folge von Bildern zeitlich prädiktionskodierte Bilder, insbesondere P-Bilder, und nicht zeitlich prädiktionskodierte Bilder, insbesondere I-Bilder, umfasst, und dass das Synchronisationssignal (s1) zur Synchronisation der Positionen von nicht prädiktionskodierten Bildern, insbesondere von I-Bildern, in den beiden Folgen von Bildern der beiden unabhängigen Videoströme verwendet wird,
**dass** das Synchronisationssignal (s1)
• entweder eine Information über die Anzahl der prädiktionskodierten Bilder, insbesondere der P-Bilder oder der B-Bilder enthält, die auf ein nicht prädiktionskodiertes Bild, insbesondere auf ein I-Bild, in wenigstens einem der beiden Videoströme bis zum Auftreten eines weiteren nicht prädiktionskodierten Bildes folgt oder aus einer solchen Information abgeleitet ist,
• oder eine Information über den zeitlichen Versatz zwischen den Positionen von nicht prädiktionskodierten Bildern, insbesondere von I-Bildern, in den beiden Folgen von Bildern der beiden unabhängigen Videoströme enthält oder aus einer solchen Information abgeleitet ist.

3. Verfahren nach Anspruch 1 oder 2, **dadurch gekennzeichnet, dass** das Synchronisationssignal von einer Einrichtung zur Mischung des ersten und des zweiten Videostroms erzeugt wird.

4. Verfahren zur Durchführung einer Videokonferenz, bei dem wenigstens zwei Videoströme nach einem Verfahren nach einem der vorhergehenden Ansprüche 1 bis 3 gemischt werden.

5. Verfahren nach Anspruch 4, **dadurch gekennzeichnet,**
**dass** beim Eintritt eines weiteren Teilnehmers in die Videokonferenz dessen Videostrom zunächst unsynchronisiert enkodiert wird, und dass dessen Videostrom synchronisiert wird, sobald eine Einrichtung zum Mischen von Videoströmen ein Synchronisationssignal nach einem der vorhergehenden Ansprüche erzeugen kann.

6. Verfahren nach einem der Ansprüche 4 bis 5 **dadurch gekennzeichnet, dass** eine Einrichtung zum Mischen von Videoströmen dem Enkoder des Videostroms des weiteren Teilnehmers eine gewünschte Prädiktionsstruktur vor oder während der Synchronisation signalisiert.

7. Einrichtung zur Durchführung eines Verfahrens nach einem der vorhergehenden Ansprüche, **dadurch gekennzeichnet, dass** die Einrichtung zur Erzeugung und Aussendung und zur Verarbeitung eines Synchronisationssignals gemäß einem der vorhergehenden Ansprüche eingerichtet ist.

## Claims

1. A method for mixing two video streams (1, 2), having an encoding of a first video stream (1), in which a chronological sequence of images is generated,
**characterized in that**
during the generation of the sequence of images, a synchronization signal (s1) is used, on which the encoding of a second video stream (2), which is independent of the first video stream (1), is algorithmically based in the same manner as in the encoding of the first video stream (1),
**in that** to achieve the synchronization of input video streams and thus to improve an output video stream (12), during the mixing, the number of the images in an incoming image group is shortened and/or lengthened by a respective computed offset, so that the computed offset is eliminated,
**in that** the sequence of images comprises chronologically prediction-coded images, in particular P images, and non-chronologically prediction-coded images, in particular I images, and **in that** the synchronization signal (s1) is used for the synchronization of the positions of non-prediction-coded images, in particular I images, in the two sequences of images of the two independent video streams.

2. A method for mixing two video streams (1, 2), having an encoding of a first video stream (1), in which a chronological sequence of images is generated,
**characterized in that**
during the generation of the sequence of images, a synchronization signal (s1) is used which is derived from a second video stream (2) independent of the first video stream (1),
**in that** to achieve the synchronization of input video streams and thus to improve an output video stream (12), during the mixing, the number of the images in an incoming image group is shortened and/or lengthened by a respective computed offset, so that the computed offset is eliminated,
**in that** the sequence of images comprises chronologically prediction-coded images, in particular P images, and non-chronologically prediction-coded images, in particular I images, and **in that** the synchronization signal (s1) is used for the synchronization of the positions of non-prediction-coded images, in particular I images, in the two sequences of images of the two independent video streams,
**in that** the synchronization signal (s1)
• either contains an item of information about the number of the prediction-coded images, in particular the P images or the B images, which follows a non-prediction-coded image, in particular an I image, in at least one of the two video streams until the occurrence of a further non-prediction-coded image, or is derived from such an item of information,
• or contains an item of information about the time offset between the positions of non-prediction-coded images, in particular I images, in the two sequences of images of the two independent video streams or is derived from such an item of information.

3. The method as claimed in claim 1 or 2, **characterized in that** the synchronization signal is generated by a device for mixing the first and the second video stream.

4. A method for carrying out a videoconference, in which at least two video streams are mixed according to a method as claimed in any one of preceding claims 1 to 3.

5. The method as claimed in claim 4, **characterized in that** upon entry of a further user into the videoconference, the video stream thereof is firstly encoded unsynchronized, and **in that** the video stream thereof is synchronized as soon as a device for mixing video streams can generate a synchronization signal as claimed in any one of the preceding claims.

6. The method as claimed in either one of claims 4 to 5, **characterized in that** a device for mixing video streams signals a desired prediction structure to the encoder of the video stream of the further user before or during the synchronization.

7. A device for carrying out a method as claimed in any one of the preceding claims, **characterized in that** the device for generating and transmitting and for processing a synchronization signal is configured according to any one of the preceding claims.

## Revendications

1. Procédé de mixage de deux flux vidéo (1, 2) avec un codage d'un premier flux vidéo (1), dans lequel une séquence temporelle d'images est générée,
**caractérisé en ce**
**qu'**un signal de synchronisation (s1) est utilisé dans la génération de la séquence d'images, lequel signal est utilisé comme algorithme pour le codage d'un second flux vidéo (2) indépendant du premier flux vidéo (1) de la même manière que pour le codage du premier flux vidéo (1),
**qu'**afin de réaliser la synchronisation des flux vidéo d'entrée, et ainsi d'améliorer un flux vidéo de sortie (12) lors du mixage, le nombre des images dans un groupe d'images entrantes est raccourci et/ou allongé d'un décalage respectivement calculé, de sorte que le décalage calculé est éliminé,
**que** la séquence d'images comprend des images codées par prédiction temporelle, en particulier des images P, et des images codées par prédiction non temporelle, en particulier des images I, et que le signal de synchronisation (s1) pour synchroniser les positions des images non codées par prédiction, en particulier les images I, est utilisé dans les deux séquences d'images des deux flux vidéo indépendants.

2. Procédé de mixage de deux flux vidéo (1, 2) avec un codage d'un premier flux vidéo (1), dans lequel une séquence temporelle d'images est générée,
**caractérisé en ce**
**qu'**un signal de synchronisation (s1) est utilisé lors de la génération de la séquence d'images, lequel signal est dérivé d'un second flux vidéo (2) indépendant du premier flux vidéo (1),
**qu'**afin de réaliser la synchronisation des flux vidéo d'entrée, et ainsi d'améliorer un flux vidéo de sortie (12) lors du mixage, le nombre des images dans un groupe d'images entrantes est raccourci et/ou allongé d'un décalage respectivement calculé, de sorte que le décalage calculé est éliminé,
**que** la séquence d'images comprend des images codées par prédiction temporelle, en particulier des images P, et des images codées par prédiction non temporelle, en particulier des images I, et que le signal de synchronisation (s1) pour synchroniser les positions des images non codées par prédiction, en particulier les images I, est utilisé dans les deux séquences d'images des deux flux vidéo indépendants,
**que** le signal de synchronisation (s1)
• contient une information sur le nombre d'images codées par prédiction, en particulier les images P ou les images B, qui débouche sur une image non codée par prédiction, en particulier une image I, dans au moins l'un des deux flux vidéo jusqu'à l'apparition d'une autre image non codée par prédiction, ou est dérivée de ces informations,
• ou contient une information sur le décalage temporel entre les positions des images non codées par prédiction, en particulier des images I, dans les deux séquences d'images des deux flux vidéo indépendants ou est dérivée d'une telle information.

3. Procédé selon la revendication 1 ou 2, **caractérisé en ce que** le signal de synchronisation est généré par un dispositif de mixage du premier et du second flux vidéo.

4. Procédé de réalisation d'une vidéoconférence, dans lequel au moins deux flux vidéo sont mixés selon un procédé selon l'une des revendications précédentes 1 à 3.

5. Procédé selon la revendication 4, **caractérisé en ce que**, lorsqu'un autre participant entre dans la vidéoconférence, son flux vidéo est initialement codé de manière non synchronisée, et que son flux vidéo est synchronisé dès qu'un dispositif de mixage de flux vidéo peut générer un signal de synchronisation selon l'une des revendications précédentes.

6. Procédé selon l'une des revendications 4 à 5, **caractérisé en ce qu'**un dispositif de mixage de flux vidéo signale au codeur du flux vidéo de l'autre participant une structure de prédiction souhaitée avant ou pendant la synchronisation.

7. Dispositif de réalisation d'un procédé selon l'une des revendications précédentes, **caractérisé en ce que** le dispositif de génération et de transmission et de traitement d'un signal de synchronisation est configuré selon l'une des revendications précédentes.
